Europäisches Patentamt

(19) European Patent Office

Office européen des brevets

(11) Publication number: **0 041 951**
**B1**

(12) **EUROPEAN PATENT SPECIFICATION**

(45) Date of publication of patent specification: **09.11.83**

(51) Int. Cl.³: **A 01 D 41/12**

(21) Application number: **80901653.8**

(22) Date of filing: **06.08.80**

(86) International application number:
**PCT/EP80/00073**

(87) International publication number:
**WO 81/00501 05.03.81 Gazette 81/6**

(54) COMBINE HARVESTERS.

(30) Priority: **14.08.79 GB 7928249**

(43) Date of publication of application:
**23.12.81 Bulletin 81/51**

(45) Publication of the grant of the patent:
**09.11.83 Bulletin 83/45**

(84) Designated Contracting States:
**DE FR SE**

(56) References cited:
FR - A - 2 043 688
FR - A - 2 055 484
FR - A - 2 157 303
GB - A - 1 028 298
US - A - 1 663 825
US - A - 3 348 706
US - A - 3 439 683

(73) Proprietor: **MASSEY-FERGUSON SERVICES N.V.**
**Abraham de Veerstraat 7A**
**Curaçao Netherlands Antilles (NL)**
(84) **DE SE**
(73) Proprietor: **MASSEY-FERGUSON S.A.**
**La Boursidiere, RN 186**
**F-92350 le Plessis Robinson (FR)**
(84) **FR**

(72) Inventor: **VAN DEST, Jean Claude**
**27 chemin du Renard**
**Saintry-sur-Seine F-91100 (FR)**

(74) Representative: **Jones, David Bryn**
**Patent and Trade Marks Department Massey-**
**Ferguson**
**Stareton, near Kenilworth Warwickshire CV8 2LJ**
**(GB)**

Combine harvesters

Technical Field

This invention relates to combine harvesters.

An aim in the design of combine harvesters has been to increase their grain handling capacity whilst keeping their overall dimensions within acceptable limits for reasons of manufacturing cost and transportability. Increased grain handling capacity has involved the use of larger gran tanks and larger service vehicles into which the grain is periodically discharged whilst on the move. This operation is effected through a discharge pipe on the combine that is swung from a folded transport position to a discharging position in which it extends upwards away from the side of the combine and can discharge grain into a service vehicle beneath it. Generally, the discharge pipe has been connected to the grain tank at a location in the central region of the combine and has projected rearwards overhead or along the side of the combine. This arrangement has been adopted because the grain tank has been located forwards so that the centre of mass of the combine is displaced towards the front drive wheels, and the discharge pipe has been connected to the central region of the grain tank where the floor slopes down to a laterally disposed screw conveyor or auger. Although convenient, this arrangement effectively limits the length of the discharge pipe unless it is to extend beyond the rear of the combine in the transport position. A typical arrangement of this type is disclosed in French Patent Spec. No. 2 043 688.

Disclosure of the Invention

An object of the present invention is to provide a combine harvester having a discharge pipe that allows increased sideways clearance for discharging grain.

This object is achieved according to the invention by providing a combine harvester having a grain tank with a discharge pipe that is connected to the tank at or adjacent to the rear of the tank and has a portion that is movable between an unloading position in which it extends laterally from one side of the combine and a transport position in which it extends forwards from the rear of the combine. In this way, the horizontal length of the discharge pipe can be made to approach that of the combine without overhanging the front or rear of the combine.

Preferably, the discharge pipe is arranged towards one side of the combine and extends forwards over the top of the combine in the transport position.

The horizontal portion of the discharge pipe pivots sideways from the transport to the discharging position about an upright axis that is preferably inclined fowards towards the top and may be the axis of the upright portion of the discharge pipe. This inclined axis causes the outlet end of the discharge pipe to lift as it pivots to the discharging position, thereby increasing the vertical clearance for taller service vehicles.

The grain tank preferably has an inclined floor that slopes downwards towards the front so as to increase its capacity and shift the centre of mass forwards. This feature makes it necessary to provide conveyor means, such as augers, at the bottom of the tank to feed grain upwards and rearwards to the discharge pipe.

Preferably, the tank has a saddle-like form with downwardly extending side portions and each of these side portions has an inclined bottom provided with a rearwardly directed conveyor means. Laterally directed conveyor means connects the two side portions at the rear and the discharge pipe is connected to said lateral conveyor means to receive grain from both side portions.

Description of the Drawings

The invention will now be described by way of example with reference to the accompanying drawings in which:

Figure 1 is a side elevation of a combine harvester according to the invention; and

Figure 2 is a rear elevation of the combine harvester of Figure 1.

Best mode of carrying out the Invention

The illustrated combine harvester has a chassis with two front drive wheels 1 and two rear steering wheels 2. A threshing cylinder 3 is mounted between the front wheels 1 and a crop gathering table 4 is mounted on the front of the combine and feeds cut crop to the cylinder. The crop is threshed between the cylinder and open grate concave 5 and the straw is fed onto straw walkers 6 that pass it rearwards. An elevator 7 in the form of an endless conveyor collects grain that falls through the concave 5 and passes this to a shaker shoe 8 that also receives grain from the straw walkers 6. Clean grain is fed from the shaker shoe to a grain tank 9 by an elevator 10 at each side of the combine. The tank 9 is located behind the driver's cab 11 and combine engine 12, and is in the form of a saddle that straddles the straw walkers 6. The crop gathering and threshing mechanism and the grain cleaning mechanism form no part of the present invention and thus they will not be described in any further detail.

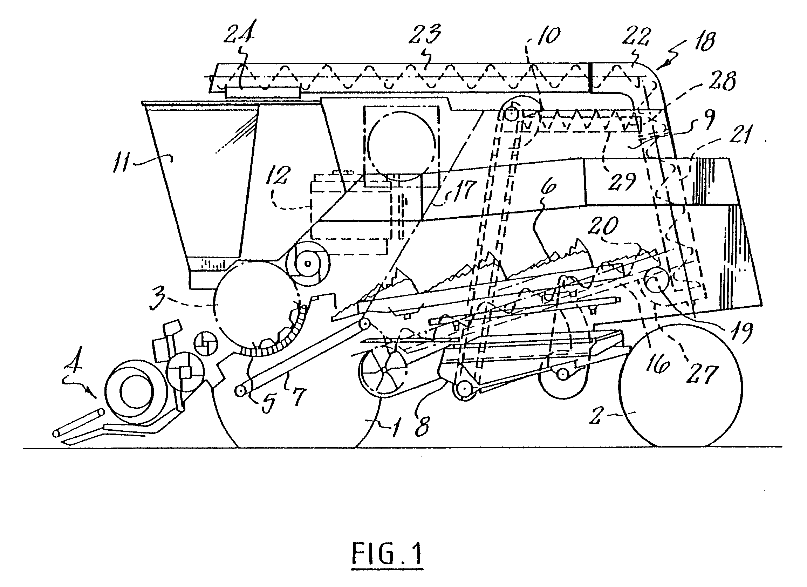

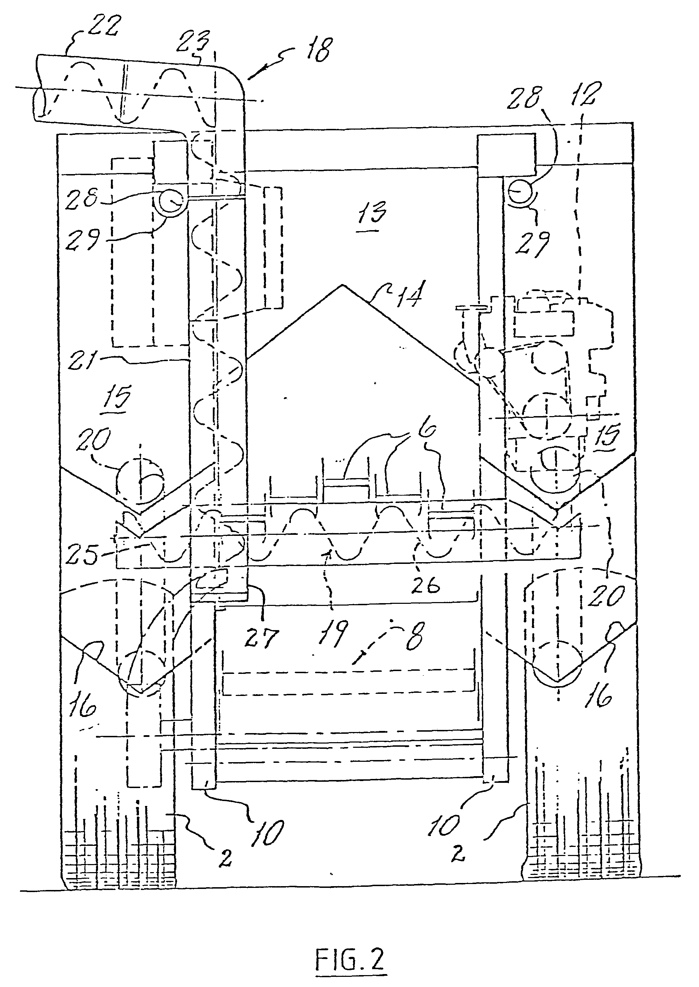

The grain tank 9 comprises a central bridging portion 13 above the straw walkers having a floor 14 that slopes downwards and outwards on each side of the centre line towards a respective side tank 15 (See Figure 2). As shown in broken outline in Figure 1, each side tank 15 has an inclined floor 16 that slopes upwards towards the rear and a front wall 17 that slopes forwards and downwards towards the ground so as to make the maximum use of the available space for grain storage.

Grain is discharged from the tank 9 through a discharge pipe 18, the lower end of which is connected to the lower rear ends of the side tanks 15 via a laterally extending auger assembly 19 that feeds grain out of both tanks (See Figure 2). An auger 20 is provided along the bottom of each side tank 15 in a V-section valley formed in the floor 16 and serves to feed grain upwards and rearwards to the lateral auger 19.

The discharge pipe 18 is located between the rear ends of the side tanks 15 alongside the left hand side tank in Figure 2, and comprises an upright portion 21 that extends upwards and forwards to the top of the grain tank 9, an elbow 22, and a substantially horizontal portion 23 that has an outlet duct 24 at its free end. The discharge pipe, or at least the horizontal portion 23, is mounted so as to pivot about the axis of the upright portion 21 so that it can be swung between a transport position in which it extends forwards above the cab 11 as seen in Figure 1, and a discharging position in which it extends laterally away from the left hand side of the combine as indicated in Figure 2. In the discharging position, the horizontal portion 23 of the discharge pipe is inclined upwards towards its free end because of the inclination of its pivot axis, the angle of inclination of the pivot axis being the angle of inclination imparted to the horizontal portion 23.

The construction of the grain feed augers 19 and 20 and the feed augers within the portions 21, 23 of the discharge pipe may conform to known designs.

The lateral auger 19 has helical flights 25, 26 of opposite hand on either side of the upright portion 21 of the discharge pipe so as to feed grain from both sides towards a well 27 formed at the bottom of the discharge pipe 18. The drive mechanism for the augers 19, 20 and those of the discharge pipe 18 is not shown but may be of conventional design.

Additional feed augers 28 are provided within the side tanks 15 beneath the output ends of the elevators 10 so as to distribute grain longitudinally in each tank, grain being fed along a channel 29 and overflowing its edges.

The engine 12 of the combine is mounted on the right hand side of the combine (as seen in Figure 2), on that side of the central longitudinal plane of the combine opposite the discharge pipe 18. The engine then counterbalances the weight of the discharge pipe and its contents when discharging grain.

**Claims**

1. A combine harvester having a grain tank with a discharge pipe that is connected to the tank and has a portion that is movable between an unloading position in which it extends laterally from one side of the combine and a transport position characterised in that said discharge pipe (18) is connected to the tank (9) at or adjacent to the rear of the tank (9) and said movable portion (23) of the discharge pipe (18) is adapted so that it extends forwards from the rear of the combine when in the transport position.

2. A combine harvester as claimed in claim 1 further characterised in that said portion (23) extends over the top of the combine in the transport position.

3. A combine harvester as claimed in claim 1 or 2 further characterised in that said portion (23) is movable between the unloading and transport positions by pivoting about an upright axis that is located towards the rear of said portion and is inclined forwards and upwards.

4. A combine harvester as claimed in claim 3 further characterised in that said portion (23) is connected at its rear to an upright portion (21) of the discharge pipe (18) that is connected to the tank (9) at its lower end.

5. A combine harvester as claimed in any one of the preceding claims further characterised in that said portion (23) lies to one side of the combine in its transport position.

6. A combine harvester as claimed in any one of the preceding claims further characterised in that the tank (9) has an inclined floor (16) that slopes downwards and forwards, conveyor means (20) being provided within the tank (9) to feed grain upwards and rearwards to the discharge pipe (18).

7. A combine harvester as claimed in claim 6 further characterised in that the tank (9) is of saddle form with a side portion (15) at each side of the combine, each side portion (15) having an inclined floor (16) and being provided with respective conveyor means (20), said conveyor means (20) being connected by lateral conveyor means (19) at or adjacent to the rear of the tank.

8. A combine harvester as claimed in any one of the preceding claims further characterised in that the tank (9) is of saddle form with a side portion (15) at each side of the combine, said side portions (15) being connected by lateral conveyor means (19) at or adjacent the rear of the tank and the discharge pipe (18) being connected to said lateral conveyor means (19) between said side portions (15).

9. A combine harvester as claimed in any one of the preceding claims further characterised in that the combine is powered by an engine (12) that lies towards that side of the combine lying opposite said one side from which the discharge pipe (18) extends in the unloading position.

**Patentansprüche**

1. Mähdrescher mit einem Korntank und einem an den Tank angeschlossenen Entladerohr, welches zwischen einer Entladestellung, in welcher es seitlich vom Mähdrescher absteht, und einer Transportstellung schwenkbar ist, dadurch gekennzeichnet, daß das Entladerohr (18) im hinteren Bereich des Tankes (9) an diesen angeschlossen ist und der schwenkbare Abschnitt (23) des Entladerohres (18) so ausgebildet ist, daß er sich in der Transportstellung von hinten nach vorn erstreckt.

2. Mähdrescher nach Anspruch 1, dadurch gekennzeichnet, daß sich der Abschnitt (23) in der Transportstellung über das Dach des Mähdreschers erstreckt.

3. Mähdrescher nach Anspruch 1 ode 2, dadurch gekennzeichnet, daß der Abschnitt (23) zwischen der Entlade- und der Transportstellung durch Schwenken um eine aufrechte Achse bewegbar ist, die im hinteren Teil des Abschnittes angeordnet und vorwärts und aufwärts geneigt ist.

4. Mähdrescher nach Anspruch 3, dadurch gekennzeichnet, daß der Abschnitt (23) mit seinem hinteren Ende an einem aufrechten Abschnitt (21) des Entladerohres (18) angeschlossen ist, welcher mit seinem unteren Ende mit dem Tank (9) verbunden ist.

5. Mähdrescher nach einem der vorausgehenden Ansprüche, daß der Abschnitt (23) in seiner Transportstellung auf einer Seite des Mähdreschers liegt.

6. Mähdrescher nach einem der vorausgehenden Ansprüche, dadurch gekennzeichnet, daß der Tank (9) einen geneigten Boden (16) aufweist, der nach vorn unten abfällt, und daß Fördereinrichtungen (20) im Tank (9) vorgesehen sind, die das Korn aufwärts nach hinten zum Entladerohr (18) fördern.

7. Mähdrescher nach Anspruch 6, dadurch gekennzeichnet, daß der Tank (9) sattelförmig ist und auf jeder Seite des Mähdreschers Seitenkammern (15) aufweist, die jeweils einen geneigten Boden (16) aufweisen und mit Fördereinrichtungen (20) versehen sind, die ihrerseits über Seitenfördereinrichtungen (19) mit dem hinteren Bereich des Tankes in Verbindung stehen.

8. Mähdrescher nach einem der vorausgehenden Ansprüche, dadurch gekennzeichnet, daß der Tank (9) sattelförmig ist und auf jeder Seite des Mähdreschers Seitenkammern (15) aufweist, die jeweils einen geneigten Boden (16) aufweisen und mit Fördereinrichtungen (20) versehen sind, die ihrerseits über Seitenfördereinrichtungen (19) mit dem hinteren Bereich des Tankes in Verbindung stehen, und daß das Entladerohr (18) zwischen den Seitenkammern (15) mit den Seitenfördereinrichtungen (19) in Verbindung steht.

9. Mähdrescher nach einem der vorausgehenden Ansprüche, dadurch gekennzeichnet, daß der Mähdrescher von einem Motor (12) angetrieben ist, welcher auf der Seite des Mähdreschers angeordnet ist, die der Seite gegenüberliegt, auf welcher sich das Entladerohr (18) in der Entladestellung befindent.

**Revendications**

1. Moissonneuse-batteuse comprenant un réservoir de grain, avec un tuyau d'évacuation qui est raccordé au réservoir et dont une partie est mobile entre une position de déchargement, dans laquelle elle s'étend latéralement d'un côtè de la machine, et une position de transport, caractérisée en ce que le tuyau d'évacuation (18) est raccordé au réservoir (9) à l'arrière ou près de l'arrière du réservoir (9), et en ce que la partie mobile (23) du tuyau d'évacuation (18) est conçue de manière à s'étendre vers l'avant, à partir de l'arrière de la machine, lorsqu'elle se trouve dans la position de transport.

2. Moissonneuse-batteuse suivant la revendication 1, caractérisée en ce que ladite partie (23) s'étend au-dessus du sommet de la machine, dans la position de transport.

3. Moissonneuse-batteuse suivant la revendication 1 ou 2, caractérisée en ce que ladite partie (23) est mobile entre les positions de déchargement et de transport, par pivotement autour d'un axe, dirigé vers le haut, qui est situé vers l'arrière de ladite partie et qui est incliné vers l'avant et vers le haut.

4. Moissonneuse-batteuse suivant la revendication 3, caractérisée en ce que ladite partie (23) est raccordée, à sa partie arrière, à une partie montante (21) du tuyau d'évacuation (18) qui est raccordée à son extrémité inférieure au réservoir (9).

5. Moissonneuse-batteuse suivant l'une quelconque des revendications précédentes, caractérisée en ce que ladite partie (23) est placée d'un côté de la machine, dans sa position de transport.

6. Moissonneuse-batteuse suivant l'une quelconque des revendications précédentes, caractérisée en ce que le réservoir (9) comporte un plancher incliné (16) qui descent vers l'avant, des moyens de transport (20) étant prévus dans le réservoir (9) pour déplacer le grain vers le haut et vers l'arrière jusqu'au tuyau d'évacuation (18).

7. Moissonneuse-batteuse suivant la revendication 6, caractérisée en ce que le réservoir (9) est en forme de selle, avec une partie latérale (15) de chaque côté de la machine, chaque partie latérale (15) comportant un plancher incliné (16) et étant pourvue de moyens de transports respectifs (20), ces moyens de transport (20) étant reliés par un dispositif de transport transversal (19), à ou près de l'arrière du réservoir.

8. Moissonneuse-batteuse suivant l'une quelconque des revendications précédentes, caractérisée en ce que le réservoir (9) est en forme de selle, avec une partie latérale (15) de chaque côté de la machine, ces parties latérales (15) étant raccordées par un dispositif de transport transversal (19), à l'arrière ou près de l'arrière du réservoir, et le tuyau d'évacuation (18) étant raccordé à ce dispositif de transport transversal (19) entre lesdites parties latérales (15).

9. Moissonneuse-batteuse suivant l'une quelconque des revendications précédentes, caractérisée en ce que la machine est mue par un moteur (12) qui est placé vers le côté de la machine situé à l'opposé du côté où s'étend le tuyau d'évacuation (28) dans la position de déchargement.

FIG.1

FIG.2